# EUROPEAN PATENT APPLICATION

(11) **EP 1 058 463 A1**
(43) Date of publication of application: **06.12.2000**
(21) Application number: 99480044.9
(22) Date of filing: 31.05.1999
(51) Int. Cl.: H04Q 3/00

(54) **Monitoring system for a virtual private network**

(71) Applicant: International Business Machines Corporation, Armonk, N.Y. 10504 (US)
(72) Inventor: Khedadi, Fabrice, 06140 Vence (FR); Schmitt, Jean-Bernard, 06650 Le Rouret (FR)
(74) Representative: Etorre, Yves Nicolas

(57) **Abstract**

Monitoring system enabling a customer station (16) to monitor via an IP network (14) the status of a first data transmission network included in a second data transmission network (10), managed by a network management station (12) providing a status of all the components of the second network. This system comprises monitoring means (26) controlled by the network management station for creating a status file (22) giving the current status of all the components of the second network which are included in the first network, and access means (24) at the disposal of the customer station for accessing the updated status file by using a server station (18) of the IP network in order to display the graphical topology of the first network in the customer station.

## Description

### Technical field

The invention relates to data communication systems wherein a service provider provides network services by the way of Virtual Private Networks (VPN) and relates in particular to a system enabling a customer of such a Virtual Private Network to monitor its network.

### Background

Large firms involved in the data communication systems provide network services to worldwide customers such as IBM with the IBM Global Services-Network Services (IGS-NS). For this, they manage a network structure able to support multiple customer networks called Virtual Private Networks (VPN).

Generally, the service provider monitors the VPNs from a Network Management Station (NMS), for example IBM NetView/6000. Such a monitoring does not make a difference whether the network component being monitored is allocated to a customer or another one or even to the infrastructure. For example, NetView/6000 is a topology manager which polls each independent component of the system every cycle to update its status on its map for the entire system. Therefore, the customer is not aware of the status of each of the components used in its VPN and not aware of its topology. Customers rely on the service provider, such as IBM, to monitor the components of its VPN through the monitoring of the entire system in compliance with the service contract. But the Network Management Station is not able to provide an individual map to each customer without showing to each one the maps of the other customers.

### Summary of the invention

Accordingly, the object of the invention is to provide, within a large network infrastructure providing a customer with a Virtural Private Network, a monitoring system able to display directly to the customer of an updated graphical topology of its VPN.

The invention relates therefore to a monitoring system enabling a customer station to monitor via an IP network the status of a first data transmission network such as a Virtual Private Network (VPN) included in a second data transmission network, the second network being managed by a network management station providing a status of all the components of the second network. This system comprises monitoring means controlled by the network management station for creating a status file giving the current status of all the components of the second network which are included in the first network, and access means at the disposal of the customer station for accessing the updated status file by using a server station of the IP network in order to display the graphical topology of the first network in said customer station.

### Brief description of the drawings

The above and other objects, features and advantages of the invention will be better understood by reading the following more particular description of the invention in conjunction with the accompanying drawings wherein :

Fig. 1 represents a schematic block diagram of the main components of the monitoring system according to the invention.

Fig. 2 is a flow chart representing the sequence of steps controlled by the Network Management Station (NMS) for updating the status files of the customer VPNs.

Fig. 3 is a flow chart representing the sequence of steps controlled by the applet uploaded into the customer station for displaying a graphical topology of the VPN.

### Detailed description of the invention

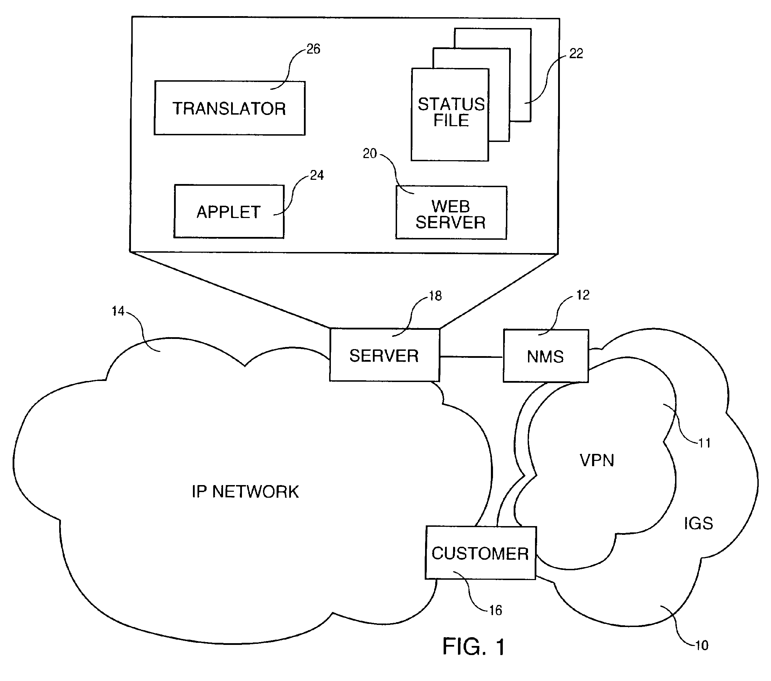

Referring to Fig.1, a part of components of a data transmission network such as the IMB Global Services (IGS) 10 are used by a customer as a Virtual Private Network (VPN)11. The service provider (e.g. IBM) is responsible for managing the network infrastructure and the VPN. For this purpose, the service provider uses a Network Management Station (NMS) 12 with a tool such as IBM NetView providing the network operator at NMS 12 with a graphical topology display of the entire network and a color-coded read-time status of its components.

The essential feature of the invention is to use the IPM network (well known Internet) 14 to which is connected a customer station 16. The NMS 12 is associated on IP network 14 with a server station 18 which includes a classical Web server 20, a data base 22 containing a status file for each VPN 11 giving the status of all the IGS components used by the VPN, a Java applet 24 which can be uploaded into customer station 16 and a translator 26 which is a new program enabling the status file of each VPN to be updated and transmitted to customer station under the control of applet 24 as described hereafter.

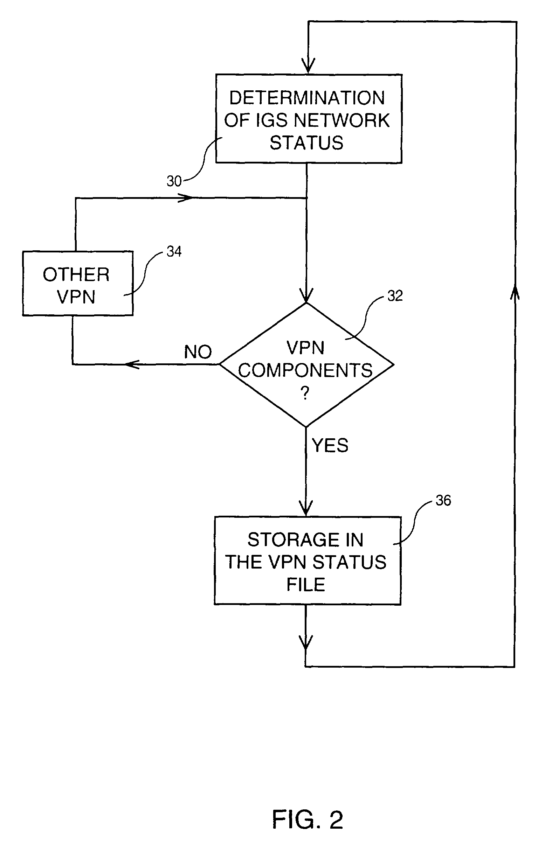

First, the status files 22 are updated according to the flow chart illustrated in Fig. 2. Periodically, for example each 5 minutes, there is retrieving by translator 26 of the list of components for the entire network IGS and their status (step 30), for example, by using a specific command of NetView which generates a file containing all the IP addresses discovered by NetView and their status.

Then, for each VPN 11, it is determined whether the components, the status of which has just been checked, belong to this VPN (step 32). If not, the program is looped back and another VPN is considered (step 34). If the components belong to the VPN being associated with the customer, the translator automatically extracts the component status and saves them in the status file of this VPN (step 36), before coming back to the beginning of the process.

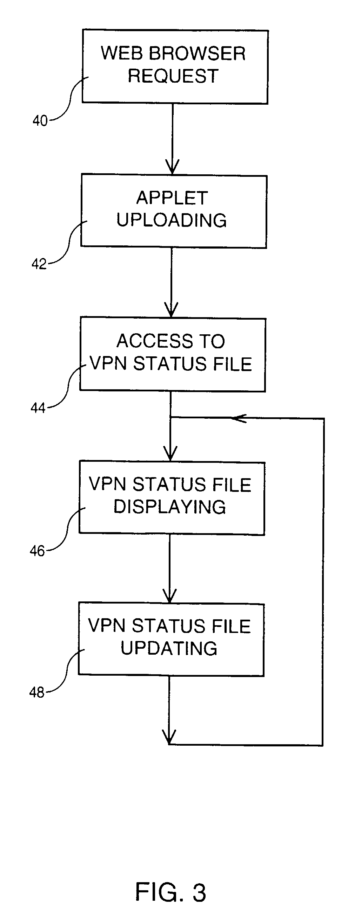

As represented by the flow chart illustrated in Fig. 3, the customer station starts monitoring the associated VPN by making a classical request on the IP network by means of a Web browser (step 40). Applet 24 is uploaded (step 42) into the customer Web browser at customer station 16. After that, the customer may access the VPN status file of the customer by using the applet (step 44). The applet then display the VPN topology based upon the data contained in the status file (step 46). As the status file is updated by the translator in the server station as described in reference to Fig. 2, the applet updates the VPN status file (step 48) and re-displays the topology accordingly, by looping back on step 46. It must be noted that the steps of displaying (step 46) and updating (step 48) are periodically repeated by using a period close to the status file updating period at the server sation as long as the customer is monitoring the status of its VPN by means of the IP network.

## Claims

1. Monitoring system enabling a customer station (16) to monitor via an IP network (14) the status of a first data transmission network included in a second data transmission network (10), said second network being managed by a network management station (12) providing a status of all the components of said second network;
said system being characterized in that it comprises :
- monitoring means (26) controlled by said network management station for creating a status file (22) giving the current status of all the components of said second network which are included in said first network, and
- access means (24) at the disposal of said customer station for accessing said updated status file by using a server station (18) of said IP network in order to display the graphical topology of said first network in said customer station.

2. Monitoring system according to claim 1, wherein said monitoring means (26) periodically checks the status of all components of said second data transmission network (10) and updates said status file when said components belong to said first network.

3. Monitoring system according to claim 2, wherein said access means (24) is an applet included in said server station (18) controlled by said network management station (12) which is uploaded into said customer station (16) at the request of said customer station being connected to said IP network (14).

4. Monitoring system according to claim 3, wherein said applet(24) periodically updates the status file transferred into said customer station (16) by using the updated status file in said IP server station (18) under the control of said network management station (12).
